# EUROPÄISCHE PATENTSCHRIFT

(11) **EP 3 011 397 B1**
(45) Veröffentlichungstag und Bekanntmachung des Hinweises auf die Patenterteilung: **27.05.2020**
(21) Anmeldenummer: 14732150.9
(22) Anmeldetag: 17.06.2014
(51) Int. Cl.: B25J 9/16, G05B 19/042

(54) **STEUERVORRICHTUNG EINER MASCHINE UND MASCHINE MIT EINER STEUERVORRICHTUNG**
CONTROL DEVICE OF A MACHINE AND MACHINE COMPRISING A CONTROL DEVICE
DISPOSITIF DE COMMANDE D'UNE MACHINE ET MACHINE DOTÉE D'UN DISPOSITIF DE COMMANDE

(30) Priorität: 18.06.2013 DE 102013211422
(43) Veröffentlichungstag der Anmeldung: 27.04.2016
(73) Patentinhaber: KUKA Deutschland GmbH, 86165 Augsburg (DE)
(72) Erfinder: SCHREIBER, Günter, 86316 Derching (DE)
(74) Vertreter: Schlotter, Alexander Carolus Paul
(86) Internationale Anmeldenummer: PCT/EP2014/062658
(87) Internationale Veröffentlichungsnummer: WO 2014/202572

(56) Entgegenhaltungen:
- EP-A2- 2 533 154
- EP-B1- 1 456 720
- DE-A1-102006 012 042
- DE-A1-102008 043 530
- US-A1- 2002 161 492
- US-A1- 2010 324 733

## Beschreibung

Die Erfindung betrifft eine Steuervorrichtung einer Maschine und eine Maschine, insbesondere einen Industrieroboter und/ oder eine mobile Plattform, mit einer Steuervorrichtung.

Steuerungen von Maschinen insbesondere von Industrierobotern umfassen in der Regel eine Sicherheitssteuerung, die einen sicheren Zustand der Maschine überwacht und gegebenenfalls eine Sicherheitsreaktion zur Überführung der Maschine in einen sicheren Zustand auslöst, insbesondere eine Bewegung der Maschine stoppt bzw. verhindert, eine Reversierbewegung der Maschine durchführt und/oder Ausgangssignale der Maschine auf einen sicheren Zustand setzt.

Die DE 10 2006 012 042 A1 offenbart eine Steuervorrichtung zur fehlersicheren Steuerung einer Maschine mit mindestens zwei Kanälen zum Abarbeiten von unabhängigen Codes. Die Steuervorrichtung umfasst einen Mehrkernprozessor mit wenigstens zwei Prozessorkernen. Die wenigstens zwei Kanäle sind jeweils durch einen der Prozessorkerne realisiert.

Die US 2010/0324733 A1 offenbart einen Roboter mit wenigstens zwei Gelenken und über jeweils wenigstens ein Gelenk relativ zueinander beweglichen Teilen. An wenigstens einem beweglichen Teil ist ein Momentensensor angeordnet, wobei Sensorkomponenten des Momentensensors zur redundanten Erfassung eines Moments ausgebildet sind. Der Roboter umfasst redundante Auswerteeinrichtungen.

Die EP 2 533 154 A2 offenbart ein Verfahren zum Überwachen von Logikbausteinen, die parallele Logikkerne aufweisen und als ein gemeinsamer Logikbaustein ausgeführt sind.

Die US 2002/0161492 A1 offenbart mit zwei Prozessoren unabhängig voneinander die Geschwindigkeit einer elektrischen Maschine zu überwachen.

Die EP 1 456 720 B1 offenbart ein mehrkerniges, redundantes Kontrollsystem, das wenigstens zwei Kontrollrechner umfasst, die jeweils einen Rechnerkern mit teil- oder vollredundanten Peripherieelementen und teil- oder vollredundanten Speicherelementen aufweisen. Diese sind auf einem gemeinsamen Chip integriert sind.

Die DE 10 2008 043 530 A1 betrifft eine Maschinensteuerung basierend auf einem PC-Computersystem aufweisend ein Sicherheitssteuerprogramm mit einem ersten und einem zweiten Programmteil, wobei der erste Programmteil einem ersten RAM und einem ersten Prozessorkern und der zweite Programmteil einem zweiten RAM und einem zweiten Prozessorkern zugeordnet ist.

Die Aufgabe der vorliegenden Erfindung ist es, eine verbesserte Steuervorrichtung einer Maschine anzugeben.

Die Aufgabe der Erfindung wird gelöst durch eine Steuervorrichtung einer Maschine, wobei die Steuervorrichtung einen Mikroprozessor umfasst, welcher wenigstens einen Hauptprozessorkern und wenigstens einen Nebenprozessorkern umfasst, wobei die Steuervorrichtung mit einem einen ersten Programmteil und einen zweiten Programmteil aufweisenden Sicherheitssteuerprogramm zum Überwachen eines mittels der Steuervorrichtung ansteuerbaren Maschinenbestandteils der Maschine konfiguriert ist, dessen erster Programmteil nur dem wenigstens einen Hauptprozessorkern und dessen zweiter Programmteil nur dem wenigstens einen Nebenprozessorkern zugeordnet ist, wobei der Nebenkernprozessor ein Grafikprozessor, ein Vektorprozessor, oder ein Streamprozessor ist und wobei beide Programmteile des Sicherheitssteuerprogramms unabhängig voneinander die Maschine bzw. den Maschinenbestandteil überwachen.

Die Maschine ist insbesondere eine elektrische Maschine, beispielsweise ein Roboter bzw. ein Industrieroboter und/ oder eine mobile Plattform. Die Maschine umfasst den mittels der Steuervorrichtung ansteuerbaren Maschinenbestandteil. Im Falle des Roboters bzw. des Industrieroboters ist dieser Maschinebestandteil als ein Roboterarm ausgeführt. Die mobile Plattform umfasst insbesondere einen Fahrzeugkörper mit wenigstens einem Rad und wenigstens einem Antrieb zum Bewegen wenigstens einer der Räder. In diesem Fall stellt der Antrieb mit bewegtem Rad den Maschinenbestandteil dar.

Ein weiterer Aspekt der Erfindung betrifft demnach eine Maschine, insbesondere eine elektrische Maschine, aufweisend einen Maschinenbestandteil und die erfindungsgemäße Steuervorrichtung zum Ansteuern des Maschinenbestandteils. Die Maschine ist insbesondere ein Roboter bzw. Industrieroboter, dessen Maschinenbestandteil als ein Roboterarm ausgeführt ist. Die Maschine kann insbesondere auch eine mobile Plattform sein.

Der Roboterarm umfasst insbesondere mehrere, hintereinander angeordnete, mittels Gelenke verbundene Glieder, welche insbesondere mittels Antrieben, vorzugsweise elektrischen Antrieben bewegt wird. Die Antriebe können geregelte elektrische Antriebe sein.

Die erfindungsgemäße Steuervorrichtung ist vorgesehen, mittels des Sicherheitssteuerprogramms den Maschinenbestandteil zu überwachen. Die erfindungsgemäße Steuervorrichtung basiert insbesondere auf einem PC-Computersystem, also auf einem Standard-PC mit einem Mikroprozessor.

Mikroprozessoren können neben dem Hauptprozessorkern (CPU) bzw. den Hauptprozessorkernen auch wenigstens einen Nebenprozessorkern aufweisen, der vorzugsweise für Grafikanwendungen und/oder Multimediaunterstützung gedacht ist. All das befindet sich in einem Chip bzw. integrierten Schaltkreis. Der Nebenprozessorkern stellt neben dem Hauptprozessorkern ein weiteres, vom wenigstens einen Hauptprozessorkern unabhängiges Rechenwerk dar. Solche Mikroprozessoren werden bisweilen auch als sogenannte APUs (Advanced Processing Unit) bezeichnet.

Die Architektur des wenigstens einen Hauptprozessorkerns unterscheidet sich somit wesentlich von der Architektur des wenigstens einen Nebenprozessorkerns. Der Nebenprozessorkern ist ein Grafikprozessor, ein Vektorprozessor, oder ein Streamprozessor. Der wenigstens eine Nebenprozessorkern ist insbesondere frei programmierbar. Somit ist insbesondere der wenigstens eine Nebenprozessorkern zur Berechnung von universellen Aufgaben abseits von reinen Grafikprozessen geeignet. Damit das Sicherheitssteuerprogramm (Sicherheitssteuerung) zuverlässiger arbeitet, ist dies erfindungsgemäß auf dem wenigstens einen Hauptprozessorkern und dem wenigstens einen Nebenprozessorkern verteilt. Dadurch ergibt sich nicht nur eine redundante Ausführung des Sicherheitssteuerprogramms, sondern dieses ist, da sich die Architektur des Hauptprozessorkerns von der des Nebenprozessorkerns unterscheidet, auch diversitär ausgeführt. Dadurch verringert sich z.B. das Risiko eines Ausfalls der Sicherheitssteuerung.

Die Erfindung bietet somit eine Sicherheitsberechnung aufgrund Diversität von verschiedenartigen Prozessorkernen eines Mikroprozessors.

Gemäß einer Variante der erfindungsgemäßen Steuervorrichtung ist das Sicherheitssteuerprogramm derart eingerichtet, dass die Steuervorrichtung mittels jeweils des ersten und des zweiten Programmteils die Maschine überwacht und eine Sicherheitsreaktion auslöst, wenn eine erste Berechnung basierend auf dem ersten Programmteil oder eine zweite Berechnung basierend auf dem zweiten Programmteil ein Sicherheitsrisiko beim Betreiben des Maschinenbestandteils detektiert. Gemäß dieser Variante überwachen beide Programmteile der Sicherheitssteuerung unabhängig voneinander die Maschine bzw. den Maschinebestandteil und lösen dann eine Sicherheitsreaktion, insbesondere das Anhalten der Maschine bzw. des Maschinenbestandteils, aus, wenn eines der beiden Programmteile, die z.B. identisch sein können, ein Sicherheitsrisiko der Maschine erkennt.

Gemäß einer bevorzugten Ausführungsform der erfindungsgemäßen Steuervorrichtung ist das Sicherheitssteuerprogramm eingerichtet, dass die Steuervorrichtung mittels jeweils des ersten und des zweiten Programmteils die Maschine überwacht und eine Sicherheitsreaktion auslöst, wenn sich eine erste Berechnung basierend auf dem ersten Programmteil und eine zweite Berechnung basierend auf dem zweiten Programmteil um einen vorgegebenen Wert unterscheiden. Dadurch werden die beiden Berechnungen gegenseitig überwacht und nur dann ein Betreiben der Maschine bzw. dessen Maschineteils erlaubt, wenn beide Berechnungen im Wesentlichen zum selben Ergebnis gelangen. Dadurch wird die Sicherheit der Sicherheitssteuerung erhöht.

Vorzugsweise kann die erfindungsgemäße Steuervorrichtung derart ausgeführt sein, dass sie mittels jeweils des ersten und des zweiten Programmteils die Maschine überwacht und nur dann ein Betreiben des Maschinebestandteils erlaubt, wenn sowohl die erste Berechnung und die zweite Berechnung ein sicheres Betreiben des Maschinenbestandteils ergeben und sich gleichzeitig die erste Berechnung und die zweite Berechnung um maximal einen vorgegebenen Wert unterscheiden. Andernfalls wird eine Sicherheitsreaktion ausgelöst, die beispielsweise die Maschine bzw. das Maschinenbestandteil, beispielsweise eine Bewegung des Roboterarms, automatisch stoppt.

Vorzugsweise führt der wenigsten eine Hauptprozessorkern den ersten Programmteil und der wenigstens eine Nebenprozessorkern den zweiten Programmteil in Echtzeit aus. Dadurch wird sicher gestellt, dass ein unsicherer Zustand der Maschine in Echtzeit erkannt und gegebenenfalls die Maschine gestoppt wird.

In der Informatik wird zwischen den Begriffen "Echtzeit" und "Modellzeit" unterschieden. Echtzeit bezieht sich auf die Zeit, die Abläufe in der "realen Welt" verbrauchen. Modellzeit hingegen bezieht sich dagegen auf die von einem Rechenprogramm selbstverwaltete Laufzeit.

Unter einem echtzeitfähigen System kann man ein System verstehen, das auf ein Ereignis innerhalb eines vorgegebenen Zeitrahmens reagieren muss. Der vorgegebene Zeitrahmen hängt von der jeweiligen Aufgabe ab, die mit Echtzeit verarbeitet werden soll, und kann beispielsweise im Mikrosekundenbereich z.B. für schnelle digitale Steuerungs und/oder Regelungsaufgaben oder auch im Sekundenbereich z.B. für Temperaturregelungen oder Füllstandsüberwachungen liegen.

Bisweilen unterscheidet man zwischen weicher und harter Echtzeit. Bei der so genannten harten Echtzeit bedeutet ein überschreiten des vorgegebenen Zeitrahmens einen Fehler. Bei der sogenannten weichen Echtzeit arbeitet dagegen das System die relevanten Eingaben in der Regel innerhalb des vorgegebenen Zeitrahmens ab, wobei grundsätzlich ein vereinzeltes Überschreiten des vorgegebenen Zeitrahmens möglich ist und zu keinem Fehler führt.

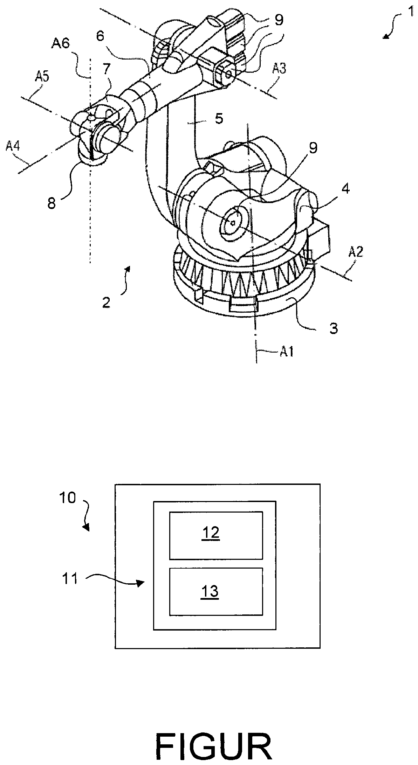

Ein Ausführungsbeispiel der Erfindung ist exemplarisch in den beigefügten schematischen Zeichnungen dargestellt, deren einzige Figur einen Roboter mit einer Steuervorrichtung zeigt.

Die Figur zeigt einen Roboter, insbesondere einen Industrieroboter 1, als Beispiel einer Maschine, insbesondere einer elektrischen Maschine in einer perspektivischen Darstellung.

Der Industrieroboter 1 weist einen Roboterarm 2 auf, der im Falle des vorliegenden Ausführungsbeispiels mehrere, nacheinander angeordnete und mittels Gelenke verbundene Glieder umfasst. Bei den Gliedern handelt es sich insbesondere um ein ortsfestes oder bewegliches Gestell 3 und ein relativ zum Gestell 3 um eine vertikal verlaufende Achse A1 drehbar gelagertes Karussell 4. Weitere Glieder des Roboterarms 2 sind im Falle des vorliegenden Ausführungsbeispiels eine Schwinge 5, ein Ausleger 6 und eine vorzugsweise mehrachsige Roboterhand 7 mit einer z.B. als Flansch 8 ausgeführten Befestigungsvorrichtung zum Befestigen eines nicht näher dargestellten Endeffektors. Die Schwinge 5 ist am unteren Ende z.B. an einem nicht näher dargestellten Schwingenlagerkopf auf dem Karussell 4 um eine vorzugsweise horizontale Achse A2 schwenkbar gelagert. Am oberen Ende der Schwinge 5 ist wiederum um eine ebenfalls vorzugsweise horizontale Achse A3 der Ausleger 6 schwenkbar gelagert. Dieser trägt endseitig die Roboterhand 7 mit ihren vorzugsweise drei Achsen A4, A5, A6.

Um den Roboter 1 bzw. dessen Roboterarm 2 zu bewegen, umfasst dieser in allgemein bekannter Weise mit einer Steuervorrichtung 10 (Robotersteuerung) verbundene elektrische Antriebe. In der Figur sind nur einige der elektrischen Motoren 9 dieser elektrischen Antriebe gezeigt, welche im oder am Roboterarm 2 befestigt sind. Leistungselektroniken der elektrischen Antriebe sind z.B. innerhalb eines Gehäuses eines nicht näher dargestellten Steuerschranks angeordnet, innerhalb dem z.B. auch die Steuervorrichtung 10 angeordnet ist. Die elektrischen Motoren 9 sind im Falle des vorliegenden Ausführungsbeispiels Drehstrommotoren, beispielsweise Drehstrom-Synchronmotoren. Die Leistungselektroniken können aber auch im und/oder am Roboterarm 2 angeordnet sein.

Auf der Steuervorrichtung 10 läuft ein Rechenprogramm, mittels dem der die Steuervorrichtung 10 die Antriebe derart steuert bzw. regelt, so dass der Flansch 8 des Industrieroboters 1 eine vorgegebene Bewegung durchführt. Die Antriebe sind gegebenenfalls geregelte elektrische Antriebe.

Die Steuervorrichtung 10 weist im Falle des vorliegenden Ausführungsbeispiels einen Mikroprozessor 11, der insbesondere als eine APU ausgebildet ist, auf, welcher wenigstens einen Hauptprozessorkern 12 und wenigstens einen Nebenprozessorkern 13 umfasst. Die Architektur des Hauptprozessorkerns 12 bzw. der Hauptprozessorkerne 12 unterscheidet sich wesentlich von der Architektur des wenigstens einen Nebenprozessorkerns 13. Der Nebenprozessorkern 13 ist insbesondere ein Grafikprozessor, ein Vektorprozessor oder ein Streamprozessor. Der wenigstens eine Nebenprozessorkern 13 ist insbesondere frei programmierbar. Somit ist insbesondere der wenigstens eine Nebenprozessorkern 13 zur Berechnung von universellen Aufgaben abseits von reinen Grafikprozessen geeignet. Der Hauptprozessorkern 12 und der Nebenprozessorkern 13 sind somit eigenständige Recheneinheiten.

Im Falle des vorliegenden Ausführungsbeispiels handelt es sich bei der Steuervorrichtung 10 im Wesentlichen um einen PC.

Der Haupt- und der Nebenprozessorkern 12, 13 werden im Falle des vorliegenden Ausführungsbeispiels zusätzlich zur Steuerung bzw. Regelung des Industrieroboters 1 als je ein Kanal einer zweikanaligen Sicherheitsteuerung eingesetzt. Jeder der Kanäle der Sicherheitssteuerung berechnet unabhängig voneinander, ob zur Zeit eine sichere Bewegung des Industrieroboters 1 bzw. dessen Roboterarms 2 möglich ist, und erlaubt nur dann die Bewegung, wenn beide Berechnungen auf eine sichere Bewegung schließen. Ist dies nicht möglich, dann wird eine Bewegung des Industrieroboters 1 bzw. dessen Roboterarms 2 gestoppt. Im Falle des vorliegenden Ausführungsbeispiels werden zusätzlich die beiden Berechnungen noch miteinander verglichen und nur dann eine Bewegung des Roboterarms 2 erlaubt, wenn beide Berechnungen im Wesentlichen dasselbe Ergebnis liefern. Bei einer Abweichung um einen vorgegebenen Wert wird ebenfalls die Bewegung automatisch gestoppt.

Der wenigstens eine Hauptprozessorkern 12 und der wenigstens eine Nebenprozessorkern 13 sind im Falle des vorliegenden Ausführungsbeispiels wie folgt konfiguriert:
Der Hauptprozessorkern 12 wird als System Core verwendet. Auf ihm läuft ein Standardbetriebssystem und ein erster Teil eines Echtzeitbetriebssystems. Der Hauptprozessorkern 12 stellt dem Echtzeitbetriebssystem vorrangig bezüglich dem Standardbetriebssystem Rechenzeit, wenn benötigt, zur Verfügung.

Auf dem Standardbetriebssystem läuft die Benutzeroberfläche der Steuervorrichtung 10 und der Echtzeitteil der Steuervorrichtung 10, ein erster Teil (erster Kanal) der Sicherheitssteuerung des Industrieroboters 1 als geschützter "Real Time Process" (Echtzeitprozess) und der sogenannte File und Communication Helper für die Sicherheitssteuerung.

Der Nebenprozessorkern 13 wird als Controller Core verwendet. Der Nebenprozessorkern 13 wird im Falle des vorliegenden Ausführungsbeispiels ausschließlich von einem zweiten Teil des Echtzeitbetriebssystems verwendet, nämlich dem Regler für die Robotersteuerung und dem zweiten Kanal der Sicherheitssteuerung als geschützter "Real Time Process" (Echtzeitprozess).

Im Falle des vorliegenden Ausführungsbeispiels ist das BIOS der Steuervorrichtung 10 derart konfiguriert, dass es seinen nicht näher dargestellten Speicher-Controller so initialisiert, dass zwei nicht näher dargestellte DRAM Speicherriegel zu zwei unterschiedlichen Adressräumen beitragen. Dadurch wird ermöglicht, dass der dem Hauptprozessorkern 12 zugeordnete erste Teil der Sicherheitssteuerung im Bereich des ersten DRAM Speicherriegels und der dem Nebenprozessorkern 13 zugeordnete zweite Teil der Sicherheitssteuerung im Adressraum eines zweiten DRAM Speicherriegel abgelegt und ausgeführt wird.

## Patentansprüche

1. Steuervorrichtung einer Maschine, wobei die Steuervorrichtung (10) einen Mikroprozessor (11) umfasst, welcher wenigstens einen Hauptprozessorkern (12) und wenigstens einen Nebenprozessorkern (13) umfasst, wobei die Steuervorrichtung (10) mit einem einen ersten Programmteil und einen zweiten Programmteil aufweisenden Sicherheitssteuerprogramm zum Überwachen eines mittels der Steuervorrichtung (10) ansteuerbaren Maschinenbestandteils (2) der Maschine (1) konfiguriert ist, dessen erster Programmteil nur dem wenigstens einen Hauptprozessorkern (12) und dessen zweiter Programmteil nur dem wenigstens einen Nebenprozessorkern (13) zugeordnet ist, wobei der wenigstens eine Nebenprozessorkern (13) als ein Grafikprozessorkern, ein Vektorprozessorkern oder ein Streamprozessorkern ausgebildet ist und wobei beide Programmteile des Sicherheitssteuerprogramms unabhängig voneinander die Maschine bzw. den Maschinenbestandteil überwachen.

2. Steuervorrichtung nach Anspruch 1, bei der sich die Architektur des Hauptprozessorkerns (12) wesentlich von der Architektur des wenigstens einen Nebenkernprozessors (13) unterscheidet.

3. Steuervorrichtung nach Anspruch 1 oder 2, bei der das Sicherheitssteuerprogramm eingerichtet ist, mittels jeweils des ersten und des zweiten Programmteils die Maschine (1) zu überwachen und eine Sicherheitsreaktion auszulösen, wenn eine erste Berechnung basierend auf dem ersten Programmteil oder eine zweite Berechnung basierend auf dem zweiten Programmteil ein Sicherheitsrisiko für das Betreiben des Maschinenbestandteils (2) detektiert .

4. Steuervorrichtung nach einem der Ansprüche 1 bis 3, bei der das Sicherheitssteuerprogramm eingerichtet ist, mittels jeweils des ersten und des zweiten Programmteils die Maschine (1) zu überwachen und eine Sicherheitsreaktion auszulösen, wenn sich eine erste Berechnung basierend auf dem ersten Programmteil und eine zweite Berechnung basierend auf dem zweiten Programmteil um einen vorgegeben Wert unterscheiden.

5. Steuervorrichtung nach einem der Ansprüche 1 bis 4, bei der der wenigstens eine Hauptprozessorkern (12) den ersten Programmteil und der wenigstens eine Nebenprozessor- kern (13) den zweiten Programmteil in Echtzeit ausführt.

6. Maschine, aufweisend einen Maschinenbestandteil (2) und eine zum Ansteuern des Maschinenbestandteils (2) vorgesehene Steuervorrichtung (10) nach einem der Ansprüche 1 bis 5.

7. Industrieroboter, aufweisend einen Roboterarm (2) und eine zum Bewegen des Roboterarms (2) vorgesehene Steuervorrichtung (10) nach einem der Ansprüche 1 bis 5.

8. Mobile Plattform, aufweisend einen Fahrzeugkörper mit mehreren Rädern und wenigstens einem Antrieb zum Bewegen wenigstens einer der Räder, und eine zum Ansteuern des wenigstens einen Antriebs vorgesehene Steuervorrichtung (10) nach einem der Ansprüche 1 bis 5

## Claims

1. A control device of a machine, wherein the control device (10) comprises a microprocessor (11) which comprises at least a main processor core (12) and at least one secondary processor core (13), wherein the control device (10) is configured with a safety control program having a first program part and a second program part for monitoring a machine component (2) of the machine (1) which machine component (2) can be driven by means of the control device (10), whose first program part is assigned only to the at least one main processor core (12) and whose second program part is assigned only to the at least one secondary processor core (13), wherein the at least one secondary processor core (13) is constructed as a graphics processor core, a vector processor core or a stream processor core and wherein both program parts of the safety control program, independently of one another, monitor the machine or the machine component.

2. The control device according to claim 1, in which the architecture of the main processor core (12) is substantially different from the architecture of the at least one secondary processor core (13).

3. The control device according to claim 1 or 2, in which the safety control program is arranged to monitor the machine (1) by means of each of the first and second program parts and to trigger a safety reaction if a first calculation which is based on the first program part or a second calculation which is based on the second program part detects a safety risk for the operation of the machine component (2).

4. The control device according to any one of the claims 1 to 3, in which the safety control program is arranged to monitor the machine (1) by means of each of the first and second program parts and to trigger a safety reaction if a first calculation which is based on the first program part and a second calculation which is based on the second program part differ from each other by a predetermined value.

5. The control device according to any one of the claims 1 to 4, in which the at least one main processor core (12) executes the first program part and the at least one secondary processor core (13) executes the second program part in real time.

6. A machine comprising a machine component (2) and a control device (10) according to any one of the claims 1 to 5, which is provided for controlling the machine component (2).

7. An industrial robot comprising a robot arm (2) and a control device (10) according to any one of the claims 1 to 5, which is provided for moving the robot arm (2).

8. A mobile platform comprising a vehicle body with a plurality of wheels and at least one drive for moving at least one of the wheels, and a control device (10) according to any one of the claims 1 to 5, which is provided for controlling the at least one drive.

## Revendications

1. Dispositif de commande d'une machine, dans lequel le dispositif de commande (10) comprend un microprocesseur (11), lequel comprend au moins un noyau de processeur principal (12) et au moins un noyau de processeur secondaire (13), dans lequel le dispositif de commande (10) est configuré avec un programme de commande de sécurité présentant un premier élément de programme et un deuxième élément de programme pour la surveillance d'un composant de machine (2) pouvant être commandé au moyen du dispositif de commande (10) de la machine (1), dont le premier élément de programme est associé seulement à l'au moins un noyau de processeur principal (12) et dont le deuxième élément de programme est associé seulement à l'au moins un noyau de processeur secondaire (13), dans lequel l'au moins un noyau de processeur secondaire (13) est réalisé en tant que noyau de processeur graphique, noyau de processeur de vecteur ou noyau de processeur de diffusion et dans lequel les deux éléments de programme du programme de commande de sécurité surveillent indépendamment l'un de l'autre la machine ou le composant de machine.

2. Dispositif de commande selon la revendication 1, dans lequel l'architecture du noyau de processeur principal (12) se distingue sensiblement de l'architecture de l'au moins un processeur de noyau secondaire (13).

3. Dispositif de commande selon la revendication 1 ou 2, dans lequel le programme de commande de sécurité est aménagé pour surveiller la machine (1) au moyen respectivement du premier et du deuxième élément de programme et pour déclencher une réaction de sécurité, lorsqu'un premier calcul sur la base du premier élément de programme ou un deuxième calcul sur la base du deuxième élément de programme détecte un risque de sécurité pour l'exploitation du composant de machine (2).

4. Dispositif de commande selon l'une quelconque des revendications 1 à 3, dans lequel le programme de commande de sécurité est aménagé pour surveiller la machine (1) au moyen respectivement du premier et du deuxième élément de programme et pour déclencher une réaction de sécurité, lorsqu'un premier calcul sur la base du premier élément de programme et un deuxième calcul sur la base du deuxième élément de programme se distinguent d'une valeur prédéfinie.

5. Dispositif de commande selon l'une quelconque des revendications 1 à 4, dans lequel l'au moins un noyau de processeur principal (12) exécute le premier élément de programme et l'au moins un noyau de processeur secondaire (13) exécute le deuxième élément de programme en temps réel.

6. Machine, présentant un composant de machine (2) et un dispositif de commande (10) selon l'une quelconque des revendications 1 à 5 prévu pour la commande du composant de machine (2).

7. Robot industriel, présentant un bras de robot (2) et un dispositif de commande (10) selon l'une quelconque des revendications 1 à 5 prévu pour le déplacement du bras de robot (2).

8. Plateforme mobile, présentant un corps de véhicule avec plusieurs roues et au moins un entraînement pour le déplacement d'au moins une des roues, et un dispositif de commande (10) selon l'une quelconque des revendications 1 à 5 prévu pour la commande de l'au moins un entraînement.
